# EUROPEAN PATENT SPECIFICATION

(11) **EP 1 764 253 B1**
(45) Date of publication and mention of the grant of the patent: **09.05.2012**
(21) Application number: 05719934.1
(22) Date of filing: 03.03.2005
(51) Int. Cl.: B60K 7/00, B60K 17/04, B62D 11/14

(54) **TRANSMISSION OF WORK VEHICLE**
GETRIEBE FÜR EIN ARBEITSFAHRZEUG
TRANSMISSION D UN VEHICULE DE TRAVAIL

(30) Priority: 16.03.2004 JP 2004074464
(43) Date of publication of application: 21.03.2007
(73) Proprietor: Yanmar Co., Ltd., Osaka-shi, Osaka 530-8311 (JP)
(72) Inventor: SHINKO, Tadayuki, Osaka-shi, Osaka 530-0013 (JP); NOCHI, Susumu, Osaka-shi, Osaka 530-0013 (JP)
(74) Representative: Jostarndt, Hans-Dieter
(86) International application number: PCT/JP2005/003630
(87) International publication number: WO 2005/087530

(56) References cited:
- EP-A- 0 013 190
- DE-A1- 4 230 534
- DE-C- 747 763
- JP-A- 5 050 867
- JP-A- 9 207 810
- JP-A- 2002 274 417
- JP-A- 2002 274 417
- JP-A- 2003 080 963
- US-A- 4 917 200

## Description

### The technical field to which the invention belongs

The present invention relates to an art concerning a transmission of a working vehicle having a input part and a pair of traveling units.

### Description of the Prior Art

Conventionally, there is well known an art concerning a working vehicle having a input part such as an engine and a pair of traveling units such as crawlers and used for various work. As an example of such a working vehicle, a snow blower, a crawler tractor or a crawler-type control machine can be shown. For example, an example is described in JP-2000-054335.

With regard to a snow blower described therein, driving force is transmitted from an engine through a traveling HST (Hydro Static Transmission) to left and right crawlers. A clutch and a brake are provided on a transmission route of driving force between the HST and the left and right crawlers so that the clutch blocks the transmission of driving force to one of the crawlers and the brake locks the one of the crawlers, whereby the vehicle turns. However, by this method of turning, it is difficult to turn smoothly. Furthermore, when the vehicle turns on a soft ground, the traveling units may sink.

As a method for solving the above problem, there is well known a method so that a pair of left and right differentials are provided in a transmission that driving force from a driving source is changed by a traveling HST in speed and is transmitted to left and right traveling units. A turning actuator is provided which inputs driving force to the differentials so as to accelerate one of the traveling units and to decelerate the other traveling unit. Accordingly, the traveling speed of each of the traveling units is changed smoothly so as to turn.

However, if a HST is provided as the turning actuator of the transmission, two HSTs are used including the traveling HST, thereby increasing production cost. On the other hand, if an electric motor is used as the turning actuator, the electric motor is required large output, whereby the actuator becomes large and production cost is increased.
If the differentials are provided in the transmission, it is necessary to provide a clutch and a brake on a transmission route of driving force between the turning actuator and the differentials so as to provide backflow of driving force from the driving source toward the turning actuator at the time of not operating the turning actuator (at the time of straight traveling). It also increases part number and production cost.
Furthermore, a transmission for a working vehicle is known from US4917200, on which the preamble of claim 1 is based, using motors for driving the ring gear of each differential in order to steer the vehicle.
JP-2002-274417 teaches the use of a hydrostatic stepless transmission to transmit torque from an engine to the planetary differentials driving the travelling units of a crawler.

### Summary of the Invention

### Problems to Be Solved by the Invention

The purpose of the present invention is to provide a transmission of a working vehicle which enable smooth turning and can be produced cheaply.

### Means for Solving the Problems

A transmission of a working vehicle according to the present invention has a input part and a pair of traveling units, and comprises a pair of differentials each of which has a sun gear, a carrier having a plurality of planetary gears, and a ring gear; a stepless transmission changing driving force from the input part in speed and then inputting the driving force into the sun gear of each of the differentials; and a pair of motors each of which inputs driving force into corresponding one of the differentials, wherein each of the motors driven rotatively the corresponding ring gears so as to reduce rotary speed of the corresponding carrier.

With regard to the transmission of a working vehicle according to the present invention, both of the motors are not driven rotatively at straight traveling of the working vehicle and one of the motors is driven rotatively at turning of the working vehicle.

With regard to the transmission of a working vehicle according to the present invention, a hydrostatic stepless transmission is used as the stepless transmission.

The transmission of a working vehicle according to the present invention has a input part and a pair of traveling units, and comprises a pair of differentials each of which has a sun gear, a carrier having a plurality of planetary gears, and a ring gear; a stepless transmission changing driving force from the input part in speed and then inputting the driving force into the sun gear of each of the differentials; and a pair of motors each of which inputs driving force into corresponding one of the differentials, wherein each of the ring gears is a worm wheel, and a worm of worm gear is provided on an output shaft of each of the motors.

With regard to the transmission of a working vehicle according to the present invention, both of the motors are not driven rotatively at straight traveling of the working vehicle and one of the motors is driven rotatively at turning of the working vehicle.

With regard to the transmission of a working vehicle according to the present invention, a hydrostatic stepless transmission is used as the stepless transmission.

### Effect of the Invention

A transmission of a working vehicle according to the present invention has a input part and a pair of traveling units, and comprises a pair of differentials each of which has a sun gear, a carrier having a plurality of planetary gears, and a ring gear; a stepless transmission changing driving force from the input part in speed and then inputting the driving force into the sun gear of each of the differentials; and a pair of motors each of which inputs driving force into corresponding one of the differentials, wherein each of the motors driven rotatively the corresponding ring gears so as to reduce rotary speed of the corresponding carrier. Accordingly, smooth turning is enabled. Furthermore, the output of each of the motors is not necessary to be high, thereby reducing production cost of the transmission.

With regard to the transmission of a working vehicle according to the present invention, both of the motors are not driven rotatively at straight traveling of the working vehicle and one of the motors is driven rotatively at turning of the working vehicle. Accordingly, the output of each of the motors is not necessary to be high, thereby reducing production cost of the transmission.

With regard to the transmission of a working vehicle according to the present invention, a hydrostatic stepless transmission is used as the stepless transmission. Accordingly, smooth turning and high driving force transmission efficiency can be achieved.

The transmission of a working vehicle according to the present invention has a input part and a pair of traveling units, and comprises a pair of differentials each of which has a sun gear, a carrier having a plurality of planetary gears, and a ring gear; a stepless transmission changing driving force from the input part in speed and then inputting the driving force into the sun gear of each of the differentials; and a pair of motors each of which inputs driving force into corresponding one of the differentials, wherein each of the ring gears is a worm wheel, and a worm gear is provided on an output shaft of each of the motors. Accordingly, smooth turning is enabled. Furthermore, according to self-lock function of the worm gear, the backflow of driving force to each of the motors at the time of straight traveling can be prevented, thereby reducing part number and production cost.

With regard to the transmission of a working vehicle according to the present invention, both of the motors are not driven rotatively at straight traveling of the working vehicle and one of the motors is driven rotatively at turning of the working vehicle. Accordingly, the output of each of the motors is not necessary to be high, thereby reducing production cost of the transmission.

With regard to the transmission of a working vehicle according to the present invention, a hydrostatic stepless transmission is used as the stepless transmission. Accordingly, smooth turning and high driving force transmission efficiency can be achieved.

### Brief Description of the Drawings

[Fig. 1] Fig. 1 is a left side view of a snow blower.
[Fig. 2] Fig. 2 is a schematic diagram of a driving force transmission route of the snow blower.
[Fig. 3] Fig. 3 is a skeleton drawing of a transmission according to the present invention.
[Fig. 4] Fig. 4 is a plan view partially in section of the transmission according to the present invention.
[Fig. 5] Fig. 5 is a left side view of the transmission according to the present invention. Description of Notations

- 1: a snow blower (working vehicle)
- 4L: a traveling unit (left side)
- 4R: a traveling unit (right side)
- 31: an engine (driving source)
- 101: a transmission
- 103: a HST
- 104L: a differential (left side)
- 104R: a differential (right side)
- 105L: a left motor
- 105R: a right motor

### The Best Mode of Embodiment of the Invention

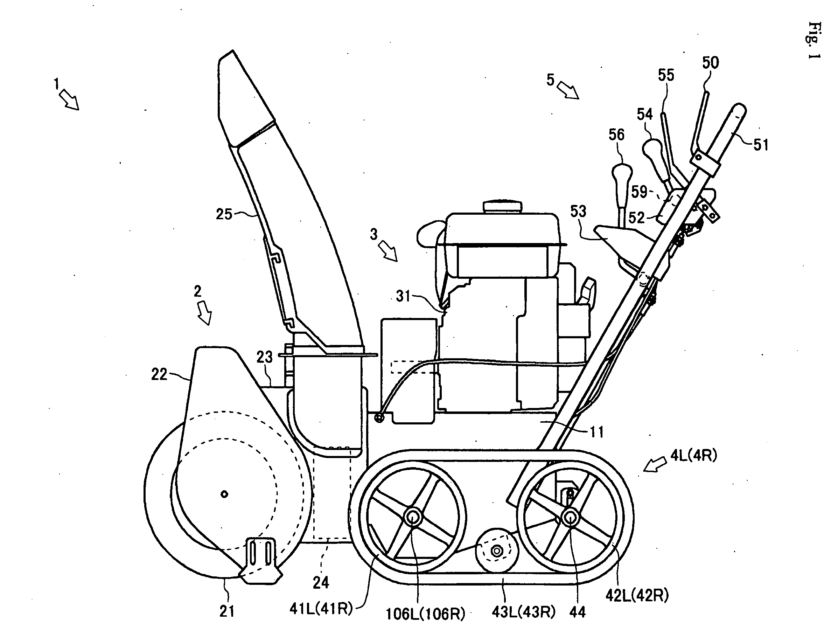

Hereinafter, explanation will be given on an entire construction of a snow blower 1, which is an embodiment of a working vehicle of the present invention, according to Fig. 1. The snow blower 1 comprises a snow blowing part 2, a driving part 3, a pair of left and right traveling units 4L and 4R, an operating part 5 and the like.
In addition, the present invention is not limited to be adopted to only the snow blower 1, and is adoptable widely to a working vehicle having a driving source such as an engine and a pair of traveling units (for example, a pair of traveling wheels or crawlers). A concrete example of the working vehicle is a crawler tractor, a crawler type controller, a crawler type agricultural machine such as a mower, a snow blower or the like.

Hereinafter, explanation will be given on the detailed construction of the snow blowing part 2 according to Fig. 1.
The snow blowing part 2 is disposed on a front portion of a body frame 11 of the snow blower 1 so as to remove snow on the traveling route of the snow blower 1. The snow blowing part 2 mainly comprises a scraping auger 21, an auger housing 22, a blower housing 23, a blower 24, and a shooter 25.

The scraping auger 21 gathers snow on the traveling route of the snow blower 1 to the center of the front portion of the body so as to send the snow to the blower 24, and comprises a substantial cylindrical member having spiral projections on the outer peripheral surface thereof.
The scraping auger 21 is arranged as close to a ground surface as possible so as not to interfere with the ground surface, and the direction of the axis thereof is substantially in agreement with the lateral direction of the vehicle body. The left and right ends of the scraping auger 21 are pivotally supported by the auger housing 22 so as to be rotatable, whereby the scraping auger 21 is rotatively driven by driving force of an engine 31.

The auger housing 22 serves both as a structure pivotally supporting the scraping auger 21 and a housing of the scraping auger 21. The auger housing 22 is provided before the blower housing 23.

The blower housing 23 serves both as a housing in which the blower 24 is provided and a structure supporting the auger housing 22. The shooter 25 is provided above the blower housing 23.

The blower 24 blows snow, carried into the blower housing 23 by the scraping auger 21, through the cylindrical shooter 25 so as to remove the snow out of the traveling route. The blower 24 is rotatively driven by driving force of the engine 31.
In addition, the shooter 25 can be turned on a horizontal plane against the blower housing 23, and the tip of the shooter 25 can be rotated upward and downward. Namely, the position can be adjusted at which the snow blown by the blower 24 and thrown out through the shooter 25 falls.

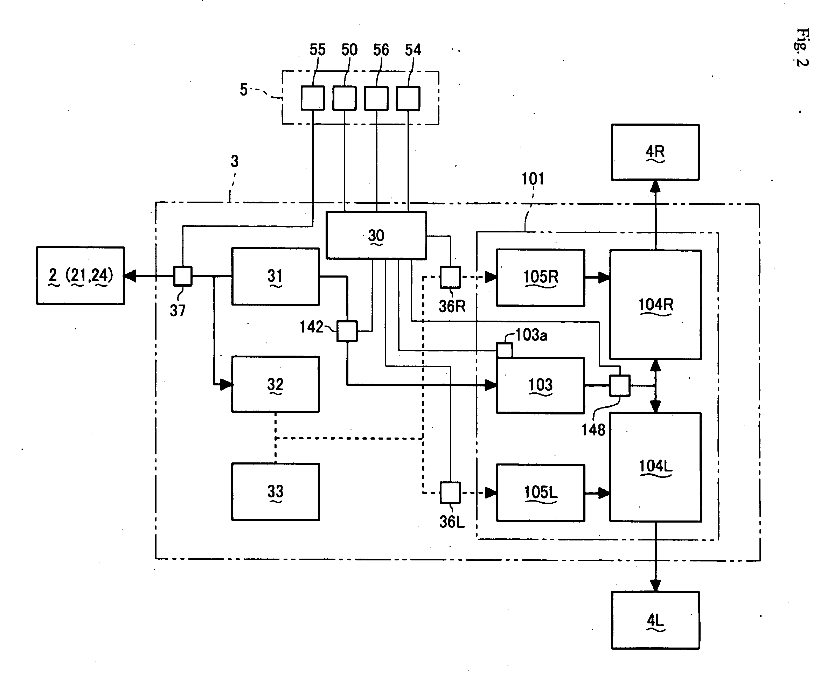

Hereinafter, explanation will be given on the detailed construction of the driving part 3 according to Figs. 1 and 2.
The driving part 3 mainly comprises the engine 31, a dynamo 32, a battery 33, and a transmission 101. The driving part 3 is provided on the body frame 11.

The engine 31 is a driving source of the snow blower 1, transmits driving force to the scraping auger 21 and the blower 24 through a driving force transmission means, and drives the dynamo 32 rotatively so as to generate electric power.
The battery 33 is charged with the electric power generated by the dynamo 32. The battery 33 (or the dynamo 32) supplies a driving circuit (inverter) 36L of a left motor 105L and a driving circuit (inverter) 36R of a right motor 105R with electric power so as to drive the left motor 105L and the right motor 105R while controlling the rotary speed thereof. The driving circuits 36L and 36R are connected to a control circuit 30.
The transmission 101 transmits driving force to the pair of the left and right traveling units 4L and 4R. In this case, the transmission 101 adjusts the rotary speed of each of the left and right traveling units 4L and 4R so as to enable straight (forward or rearward) traveling and smooth turning of the snow blower 1. The detailed construction of the transmission 101 is discussed later.

Hereinafter, explanation will be given on the detailed construction of the traveling units 4L and 4R according to Figs. 1 and 2. In addition, though the traveling units 4L and 4R in this embodiment are crawler type, the construction is not limited thereto and the traveling units 4L and 4R may alternatively be wheel type having traveling wheels. Since the traveling units 4L and 4R are bilateral symmetrical, only the traveling unit 4L is explained below and the explanation of the traveling unit 4R is omitted.

The traveling unit 4L mainly comprises a driving sprocket 41 L, a driven sprocket 42L and a crawler belt 43L.

The driving sprocket 41L is attached and fixed on an outside of a tip (left end) of an output shaft 106L projected leftward from the transmission 101. The driven sprocket 42L is attached and fixed on an outside of a left end of a driven shaft 44. The driven shaft 44 is pivotally supported on the rear portion of the body frame 11 so as to be rotatable, and the lateral direction of the driven shaft 44 is in agreement with the lateral direction of the vehicle body. The crawler belt 43L is an endless belt wound around the driving sprocket 41L and the driven sprocket 42L.

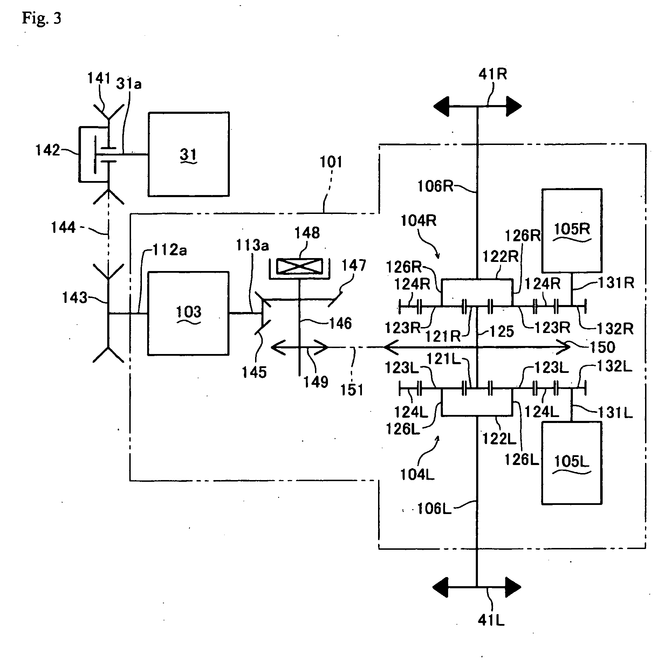

Hereinafter, explanation will be given on the transmission 101, which is an example of a transmission concerning the working vehicle of the present invention, according to Figs. 3, 4 and 5.
The transmission 101 transmits driving force from the engine 31, which is a driving source, to the left and right traveling units 4L and 4R so as to make the snow blower 1 travel straight (forward or rearward) or turn rightward or leftward. The transmission 101 mainly comprises a transmission casing 102, a HST 103, a pair of left and right differentials 104L and 104R, and the pair of the left motor 105L and the right motor 105R.

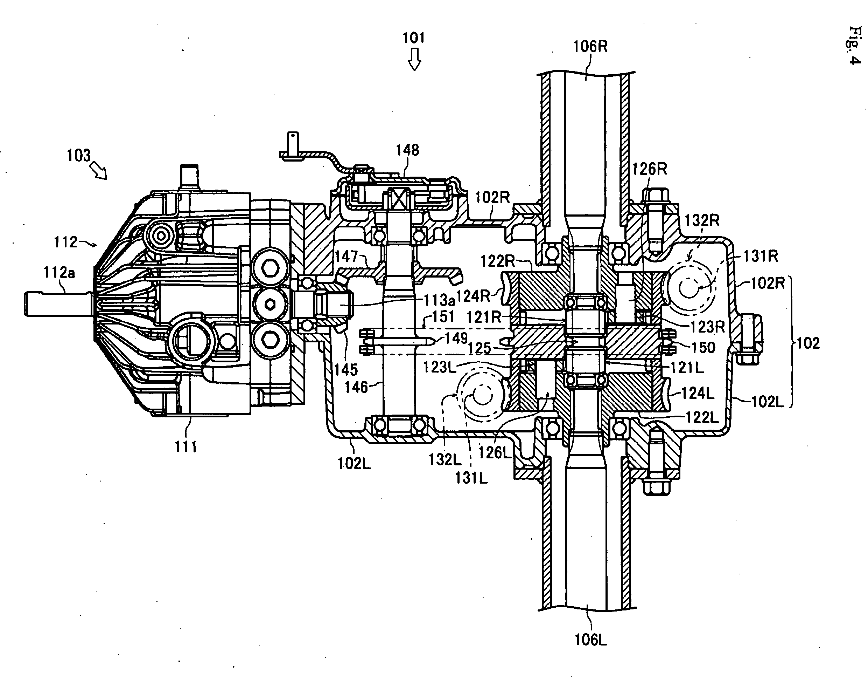

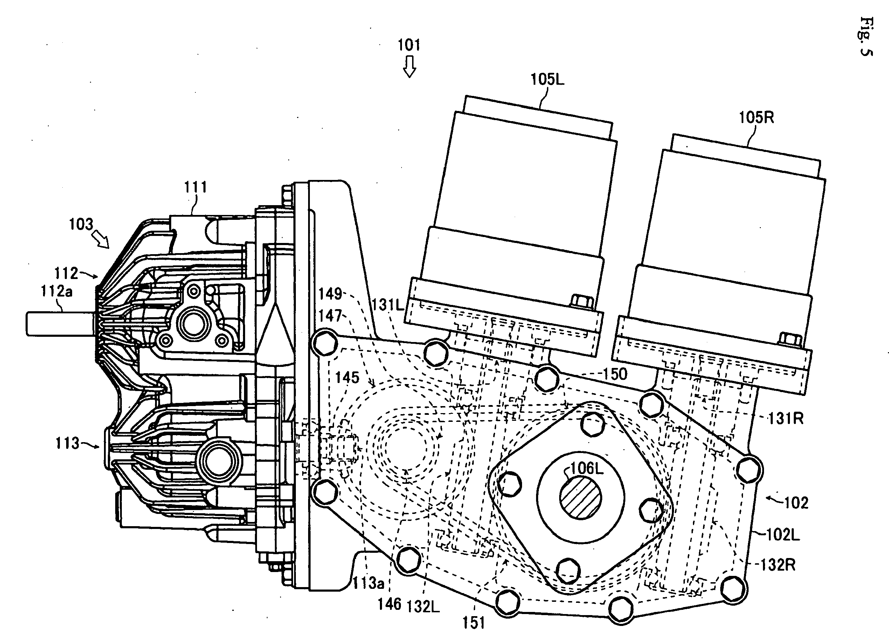

As shown in Figs. 4 and 5, the transmission casing 102 serves both as a housing in which the other members constituting the transmission 101 are housed and a structure pivotally supporting the other members constituting the transmission 101. In this embodiment, the transmission casing 102 comprises two members, a left casing 102L and a right casing 102R and is divided bilaterally.

As shown in Figs. 4 and 5, the HST (Hydro Static Transmission) 103 is an example of a stepless transmission which changes driving force inputted from the engine 31 being a driving source to the transmission casing 101 and transmits the driving force to later-discussed sun gears 121L and 121R of the differentials 104L and 104R. The HST 103 mainly comprises a casing 111, a hydraulic pump 112 and a hydraulic motor 113.

The casing 111 houses the hydraulic pump 112 and the hydraulic motor 113 therein and serves as a structure of the HST 103. A hydraulic circuit is formed in the casing 111 so as to connect the hydraulic pump 112 and the hydraulic motor 113 with each other fluidly. The casing 111 is fixed to the front portion of the transmission casing 102.

The hydraulic pump 112 in this embodiment is a so-called movable swash plate type axial piston pump and comprises an input shaft 112a, a cylinder block engaged with the input shaft 112a so as not to be rotatable relatively, a plurality of pistons airtightly slidingly touching a plurality of cylinder holes bored in the cylinder block, and a movable swash plate serving as a swash plate cam reciprocally driving the pistons. The angle between the plate surface of the movable swash plate of the hydraulic pump 112 and the axis of the input shaft can be changed. When the plate surface of the movable swash plate is perpendicular to the axis of the input shaft 112a, the hydraulic pump 112 is in the neutral state so that pressure oil is not sent to the hydraulic motor 113 even if the input shaft 112a is driven rotatively. By slanting the movable swash plate against the axis of the input shaft 112a from the perpendicular state, oil is sent to the hydraulic motor 113 interlockingly with the rotative driving of the input shaft 112a. By adjusting the slant angle of the movable swash plate, the amount of pressure oil sent for one rotation of the input shaft 112a can be adjusted.
In addition, in below explanation, "operate the HST 103" means "slant the movable swash plate of the hydraulic pump 112 against the axis of the input shaft 112a so as to send pressure oil to the hydraulic motor 113".

The hydraulic motor 113 in this embodiment is a so-called movable swash plate type axial motor pump and comprises an output shaft 113a, a cylinder block engaged with the output shaft 113a so as not to be rotatable relatively, a plurality of pistons airtightly slidingly touching a plurality of cylinder holes bored in the cylinder block, and a movable swash plate serving as a swash plate cam exchanging the reciprocal driving force of the pistons by pressure oil from the hydraulic pump 112 into rotative driving force. The angle between the plate surface of the movable swash plate of the hydraulic motor 113 and the axis of the output shaft 113a can be changed. By adjusting the slant angle of the movable swash plate, the rotation amount of the output shaft 113a corresponding to the amount of pressure oil sent from the hydraulic pump 112 can be adjusted.
In addition, the movable swash plate is adopted to the hydraulic motor 113 in this embodiment. However, instead of the movable swash plate, a fixed swash plate (the angle between the output shaft 113a and the plate surface of the swash plate is fixed) may alternatively be adopted. The stepless transmission is not limited to the HST, and another type of stepless transmission (for example, a CVT or the like) may alternatively be adopted.

In this embodiment, the input shaft 112a of the HST 103 is projected from the front portion of the transmission 101, and the output shaft 113a is inserted into the transmission casing 102.

As shown in Figs. 3, 4 and 5, a pair of left and right differentials 104L and 104R transmit driving force to the traveling units 4L and 4R respectively so as to drive the traveling units 4L and 4R.
The differential 104L mainly comprises the sun gear 121L, a carrier 122L, a plurality of planetary gears 123L (only one of them is shown in Fig. 4), and a ring gear 124L.
In addition, since the differentials 104L and 104R are bilateral symmetrical and constructed substantially similarly to each other, only the differential 104L is explained below and the explanation of the differential 104R is omitted.

The sun gear 121L is attached on the outside of the left half of a transmission shaft 125 and engages with each of the planetary gears 123L.

The carrier 122L is a substantial disk member which is attached and fixed on the outside of one of ends (right end) of the output shaft 106L and is rotated integrally with the output shaft 106L. A plurality of rotary shafts 126L (only one of them is shown in Fig. 4) is projected from one of disk surfaces of the carrier 122L opposite to the output shaft 106L, and each of the rotary shafts 126L pivotally supports one of the planetary gears 123L rotatablly. Each of the planetary gears 123L engages with the sun gear 121L.
In addition, the left end of the transmission shaft 125 is pivotally supported through a bearing by the carrier 122L.

The ring gear 124L is a substantial ring-like gear whose inner and outer peripheral surfaces are formed thereon with teeth. The inner peripheral surface of the ring gear 124L engages with the planetary gears 123L.

As shown in Figs. 3, 4 and 5, each of the left motor 105L and the right motor 105R is an electric motor and transmits driving force to the transmission 101. The left motor 105L and the right motor 105R are fixed to the upper surface of the transmission casing 102 so that mud or water doesn't adhere to the motors for preventing the short circuit by disposing distantly from the ground surface. An output shaft 131L of the left motor 105L and an output shaft 131R of the right motor 105R are inserted into the transmission casing 102.
A worm gear 132L is attached and fixed on the outside of the output shaft 131L and engages with the teeth formed on the outer peripheral surface of the ring gear 124L of the differential 104L. Namely, the ring gear 124L in this embodiment also serves as a worm wheel corresponding to the worm gear 132L.
Similarly, a worm gear 132R is attached and fixed on the outside of the output shaft 131R and engages with the teeth formed on the outer peripheral surface of a ring gear 124R of the differential 104R. Namely, the ring gear 124R in this embodiment also serves as a worm wheel corresponding to the worm gear 132R.

Hereinafter, explanation will be given on a driving force transmission route of the transmission casing 101 according to Figs. 3, 4 and 5.
As shown in Fig. 3, a pulley 141 is provided on an input shaft 31a of the engine 31 being a driving source. A clutch 142 is provided on the pulley 141. By switching the clutch 142, one of "clutch on" state (that is, the state that the pulley 141 is fixed to the input shaft 31 a and driving force can be transmitted) and "clutch off" state (that is, the state that the pulley 141 is not fixed to the input shaft 31 a and driving force cannot be transmitted) can be selected.

As shown in Fig. 3, a pulley 143 is attached and fixed on the outside of the input shaft 112a of the HST 103, and a belt 144 is wound around the pulley 141 and the pulley 143. A bevel gear 145 is attached and fixed on the outside of the output shaft 113a of the HST 103.

As shown in Figs. 3, 4 and 5, a transmission shaft 146 is pivotally supported in the front portion of the inner space of the transmission casing 102 so that the axis of the transmission shaft 146 is in agreement with the lateral direction of the vehicle body.
A bevel gear 147 and a sprocket 149 are attached and fixed on the outside of the middle portion of the transmission shaft 146. The bevel gear 147 and the sprocket 149 engage with each other.
A brake 148 is provided at one of ends (in this embodiment, the right end) of the transmission shaft 146 so as to brake the rotation of the transmission shaft 146.

A sprocket 150 is attached and fixed on the outside of the substantial center of the transmission shaft 125, and a chain 151 is wound around the sprocket 149 and the sprocket 150. The sun gears 121L and 121R are attached and fixed on the outside of the left and right halves of the transmission shaft 125 respectively.

When the clutch 142 is engaged and the brake 148 is not actuated (does not brake), driving force from the engine 31 is transmitted to the HST 103 through the input shaft 31 a, the pulley 141, the belt 144, the pulley 143 and the input shaft 112a in this order.
The driving force transmitted to the HST 103 is changed in speed by the HST 103 and then transmitted to the sun gears 121L and 121R of the differentials 104L and 104R through the output shaft 113a, the bevel gear 145, the bevel gear 147, the transmission shaft 146, the sprocket 149, the chain 151, the sprocket 150 and the transmission shaft 125 in this order.
The driving force transmitted to the differential 104L is transmitted to the driving sprocket 41L of the traveling unit 4L through the sun gear 121L, the planetary gears 123L, the rotary shafts 126L, the carrier 122L and the output shaft 106L in this order.
The driving force transmitted to the differential 104R is transmitted to the driving sprocket 41R of the traveling unit 4R through the sun gear 121R, a planetary gears 123R, a rotary shafts 126R, a carrier 122R and an output shaft 106R in this order.
Accordingly, driving force from the engine 31 is transmitted to the pair of the left and right traveling units 4L and 4R, whereby the traveling units 4L and 4R are driven rotatively. The engine 31 has higher output than an electric motor whose voltage is 12V or 24V so that tractive force at the time of traveling and driving force of the snow blowing part (working part) 2 are higher, thereby improving efficiency of the work.

On the other hand, driving force from the left motor 105L is transmitted to the driving sprocket 41 L of the traveling unit 4L through the output shaft 131L, the worm gear 132L, the ring gear 124L, the planetary gears 123L, the rotary shafts 126L, the carrier 122L and the output shaft 106L in this order.
Driving force from right right motor 105R is transmitted to the driving sprocket 41R of the traveling unit 4R through the output shaft 131R, the worm gear 132R, the ring gear 124R, the planetary gears 123R, the rotary shafts 126R, the carrier 122R and the output shaft 106R in this order.
Accordingly, driving force from each of the left motor 105L and the right motor 105R is transmitted to the corresponding traveling unit 4L or 4R, whereby the traveling units 4L and 4R are driven rotatively.
The traveling speeds of the traveling units 4L and 4R are changed corresponding to the rotary speed of the left motor 105L and the right motor 105R so as to generate difference of the traveling speed between the left and right traveling units 4L and 4R, whereby the snow blower 1 turns smoothly.

For making the snow blower 1 travel straight, it is necessary to stop the left motor 105L and the right motor 105R and to fix the ring gears 124L and 124R of the differentials 104L and 104R so as not to be rotated so that a part of driving force from the engine 31 is not transmitted through the ring gears 124L and 124R to the left motor 105L and the right motor 105R (driving force does not flow backward to the left motor 105L and the right motor 105R), thereby preventing the reduction of the straight traveling speed and straight traveling stability.
Conventionally, for providing such backflow of driving force, a braking means (brake or the like) is provided so as to brake ring gears at the time of straight traveling. However, in this method, it is necessary to provide the braking means in each differential mechanism and to provide a switching means so as to switch the working condition of the braking means according to whether the vehicle travels straight or turns, whereby part number increases and production cost increases.

Then, with regard to the transmission 101 concerning the present invention, the pair of the ring gears 124L and 124R is used as worm wheels, and the worm gears 132L and 132R are provided on the output shafts 131L and 131R of the pair of the motors (the left motor 105L and the right motor 105R). Accordingly, driving force is transmitted from the worm gear 132L to the worm wheel (the ring gear 124L) in the driving force transmission route from the left motor 105L to the ring gear 124L, and driving force is transmitted from the worm gear 132R to the worm wheel (the ring gear 124R) in the driving force transmission route from the right motor 105R to the ring gear 124R.

This construction brings following merit.
Though the worm wheel can be rotated easily by rotating the worm gear, the load is too large to rotate the worm wheel, whereby the worm gear cannot be driven rotatively by rotating the worm wheel. The property is called self-lock function. According to this function, the backflow of driving force to the left motor 105L and the right motor 105R at the time of straight traveling can be prevented, whereby the braking means such as the brake can be omitted so as to reduce part number and production cost.

For turning the snow blower 1 smoothly, following methods are supposable. (1) The traveling speed of one of the traveling units is increased, and the other traveling unit is kept in the speed at the time of straight traveling. (2) The traveling speed of one of the traveling units is increased, and the traveling speed of the other traveling unit is decreased. (3) The traveling speed of one of the traveling units is decreased, and the other traveling unit is kept in the speed at the time of straight traveling.
With regard to the method of (1) or (2), for increasing the traveling speed of the traveling unit, the left motor 105L and the right motor 105R are necessary to input driving force to the differentials 104L and 104R against the backflow of a part of driving force from the engine 31 to the left motor 105L and the right motor 105R. Accordingly, the output of each of the left motor 105L and the right motor 105R must be high, thereby increasing production cost.
On the other hand, with regard to the method of (3), a part of driving force from the engine 31 flows backward to the left motor 105L and the right motor 105R, and the left motor 105L and the right motor 105R are driven with the assist of the driving force. Accordingly, the output of each of the left motor 105L and the right motor 105R is not necessary to be high (instead, compared with (1) and (2), the traveling speed at the time of turning is slower).
Then, the method of (3) is adopted to the transmission 101 of this embodiment, and each of the left motor 105L and the right motor 105R drives the corresponding ring gear 124L or 124R rotatively along the direction so as to reduce the rotary speed of the ring gear.
According to this construction, the output of each of the left motor 105L and the right motor 105R is not necessary to be high, thereby reducing production cost of the transmission 101. Furthermore, the left motor 105L and the right motor 105R with low output are normally small, whereby the transmission 101 is miniaturized.

In this embodiment, the pair of the left motor 105L and the right motor 105R are not driven rotatively at the time of straight traveling of the snow blower 1, and one of them is driven rotatively at the time of turining of the snow blower 1.
According to this construction, the output of each of the left motor 105L and the right motor 105R is not necessary to be high, thereby reducing production cost of the transmission 101. Furthermore, the left motor 105L and the right motor 105R with low output are normally small, whereby the transmission 101 is miniaturized.

Furthermore, in this embodiment, the HST 103 is used as the stepless transmission.
According to this construction, smooth turning and high driving force transmission efficiency can be achieved.

Hereinafter, explanation will be given in detail on the construction of the operating part 5 and the traveling and turning control according to Figs. 1 and 2.
The operating part 5 mainly comprises a traveling lever 50, a steering handle 51, operating boxes 52 and 53, a turning lever 54, a snow blowing clutch lever 55 and a traveling speed change lever 56.

The steering handle 51 is extended aslant, backward and upward from the rear portion of the body frame 11 and is substantially U-like shaped when viewed in plan. The other members constituting the operating part 5 are attached to the steering handle 51, and an operator holds the steering handle 51 so as to operate the snow blower 1.

The snow blowing clutch lever 55 is attached to the steering handle 51. By the snow blowing clutch lever 55, a snow blowing clutch 37 (shown in Fig. 2) provided in the middle of the driving force transmission route from the engine 31 to the snow blowing part 2 is operated so as to turn on/off the transmission of driving force to the snow blowing part 2.

The operating box 53 is fixed to the steering handle 51, and the traveling speed change lever (or dial) 56 is attached on the operating box 53. A sensor detecting the rotary angle of the traveling speed change lever 56 is connected to the control circuit 30. On the other hand, an actuator 103a rotating the movable swash plate of the HST 103 is also connected to the control circuit 30. The control circuit 30 operates the actuator 103a based on the rotary angle of the traveling speed change lever 56 so as to perform the speed change of the HST 103.

The traveling lever 50 is provided on the steering handle 51. The traveling lever 50 is a so-called deadman clutch lever. When an operator grips the traveling lever 50, the brake 148 is released and the clutch 142 is engaged, whereby the snow blower 1 becomes ready to travel. When the operator releases the traveling lever 50, the brake 148 is actuated (brakes) and the clutch 142 is disengaged, whereby the transmission of driving force is stopped. Accordingly, if the operator falls down and releases the traveling lever 50, the snow blower 1 is stopped, whereby the safety is secured. In addition, when the traveling lever 50 is released, the traveling units 4L and 4R are locked by the brake 148, whereby the snow blower 1 is stopped even on a slope.

The turning lever 54 is provided on the operating box 52 provided at the lateral center of the steering handle 51, and an operator can slant the turning lever 54 laterally by hand. The turning lever 54 is biased by a biasing means such as a spring so as to position at the lateral center (neutral position) when the operator does not grip the turning lever 54. A sensor is provided on the turning lever 54 so as to detect the slant angle of the turning lever 54, and is connected to the control circuit 30. The driving circuit 36L of the left motor 105L and the driving circuit 36R of the right motor 105R are also connected to the control circuit 30.

When the turning lever 54 is at the neutral position, power is not supplied to the left motor 105L and the right motor 105R, and the traveling units 4L and 4R can be rotated along the same direction and at the same speed (that is, can travel straight).
When the turning lever 54 is slanted leftward at the time of forward traveling, the left motor 105L is driven rotatively so that the traveling speed of the left traveling unit 4L becomes lower than the traveling speed of the right traveling unit 4R, whereby the vehicle turns left.
At this time, the rotary speed of the left motor 105L is adjusted corresponding to the slant angle of the turning lever 54. As larger as the slant angle of the turning lever 54 becomes, as higher as the rotary speed of the left motor 105L becomes so that the snow blower 1 turns left with small turning radius.
When the turning lever 54 is slanted rightward at the time of forward traveling, the right motor 105R is driven rotatively so that the traveling speed of the right traveling unit 4R becomes lower than the traveling speed of the left traveling unit 4L, whereby the vehicle turns right.
At this time, the rotary speed of the right motor 105R is adjusted corresponding to the slant angle of the turning lever 54. As larger as the slant angle of the turning lever 54 becomes, as higher as the rotary speed of the right motor 105R becomes so that the snow blower 1 turns right with small turning radius.

### Industrial Applicability

The transmission of the working vehicle according to the present invention enables smooth turning and can be produced cheaply so as to be used for a working vehicle having a driving source and a pair of traveling units widely.

## Claims

1. A transmission (101) of a working vehicle (1) having an input part (112a) and a pair of traveling units (4R,4L), comprising:
a pair of differentials (104R,104L) each of which has a sun gear (121R,121L), a carrier (122R,122L) having a plurality of planetary gears (123R,123L), and a ring gear (124R,124L);
a pair of motors (105R,105L) each of which inputs driving force into corresponding one of the differentials (104R,104L), each of the motors (105R,105L) having an output shaft (131R,131L) that is drivingly connected to the ring gear (124R,124L) of the corresponding one of the differentials (104R,104L), so that each of the motors (105R,105L) is adapted to be driven to rotate the corresponding ring gears (124R, 124L) so that the rotary speed of the corresponding carrier (122R,122L) can be reduced; and
means for keeping both of the motors (105R,105L) from driving during straight traveling of the working vehicle (1), and for driving one of the motors (105R,105L) during turning of the working vehicle (1),
wherein, in each of the differentials (104R,104L), the carrier (122R,122L) rotates following the planetary gears (123R,123L) rotated by combining the rotation of the sun gear (121R,121L) and the rotation of the ring gear (124R,124L), and
wherein the carriers (122R,122L) of the respective differentials (104R,104L) are connected to the respective traveling units (4R,4L) so as to transmit the rotations of the respective carriers (123R,123L) to the respective traveling units (4R,4L), **characterized by** a stepless transmission (103) changing driving force from the input part (112a) in speed and then inputting the driving force into the sun gear (121R,121L) of each of the differentials (104R,104L); and
each of the ring gears (124R,124L) is a worm wheel, and a worm (132R,132L) is provided on the output shaft (131R,131L) of each of motors (105R,105L) to mesh with the worm wheel (124R,124L),
whereby the worm (132R,132L) and the worm wheel (124R,124L) are configured so that the worm (132R,132L) cannot be driven rotatively by the worm wheel, and that the backflow of driving force to both motors (105R,105L) can be prevented at the time of straight traveling.

2. The transmission of the working vehicle as set forth in claim 1, wherein electric motors are used as the pair of motors (105R, 105L).

3. The transmission of the working vehicle as set forth in claim 1 or 2, wherein a hydrostatic stepless transmission is used as the stepless transmission (103).

## Patentansprüche

1. Getriebe (101) eines Arbeitsfahrzeugs (1), das ein Eingangsteil (112a) und ein Paar Fahreinheiten (4R, 4L) aufweist, wobei das Getriebe umfasst:
ein Paar Differentiale (104R, 104L), von denen jedes ein Sonnenrad (121R, 121L), einen Träger (122R, 122L), der mehrere Planetenräder (123R, 123L) aufweist, und ein Hohlrad (124R, 124L) aufweist;
ein Paar Motoren (105R, 105L), von denen jeder in das entsprechende Differential (104R, 104L) eine Antriebskraft eingibt, wobei jeder der Motoren (105R, 105L) eine Ausgangswelle (131R, 131L) aufweist, die antreibend mit dem Hohlrad (124R, 124L) des entsprechenden Differentials (104R, 104L) verbunden ist,
sodass jeder der Motoren (105R, 105L) dafür ausgelegt ist, die entsprechenden Hohlräder (124R, 124L) so anzutreiben, dass die Drehzahl des entsprechenden Trägers (122R, 122L) verringert werden kann; und
Mittel, zum Verhindern, dass die beiden Motoren (105R, 105L) während der Geradeausfahrt des Arbeitsfahrzeugs (1) Antriebskraft abgeben, und zum Aktivieren eines der Motoren (105R, 105L) während der Richtungsänderung des Arbeitsfahrzeugs (1),
wobei sich in jedem der Differentiale (104R, 104L) der Träger (122R, 122L) den Planetenrädern (123R, 123L) folgend dreht, die durch Kombination der Drehung des Sonnenrads (121R, 121L) und der Drehung des Hohlrads (124R, 124L) gedreht werden, und
wobei die Träger (122R, 122L) der jeweiligen Differentiale (104R, 104L) mit den jeweiligen Fahreinheiten (4R, 4L) verbunden sind, um die Drehungen der jeweiligen Träger (123R, 123L) auf die jeweiligen Fahreinheiten (4R, 4L) zu übertragen, **gekennzeichnet durch**
ein stufenloses Getriebe (103), das die Antriebskraft von dem Eingangsteil (112a) in Drehzahl ändert und die Antriebskraft daraufhin in das Sonnenrad (121R, 121L) jedes der Differentiale (104R, 104L) eingibt; und
wobei jedes der Hohlräder (124R, 124L) ein Schneckenrad ist und an der Ausgangswelle (131R, 131L) jedes der Motoren (105R, 105L) eine Schnecke (132R, 132L) vorgesehen ist, um mit dem Schneckenrad (124R, 124L) zu kämmen,
wobei die Schnecke (132R, 132L) und das Schneckenrad (124R, 124L) so konfiguriert sind, dass die Schnecke (132R, 132L) nicht **durch** das Schneckenrad drehend angetrieben werden kann und dass der Rückfluss der Antriebskraft an beide Motoren (105R, 105L) zur Zeit der Geradeausfahrt verhindert werden kann.

2. Getriebe des Arbeitsfahrzeugs nach Anspruch 1, bei dem als das Paar von Motoren (105R, 105L) Elektromotoren verwendet sind.

3. Getriebe des Arbeitsfahrzeugs nach Anspruch 1 oder 2, bei dem als das stufenlose Getriebe (103) ein hydrostatisches stufenloses Getriebe verwendet ist.

## Revendications

1. Transmission (101) d'un véhicule de travail (1) ayant une partie d'entrée (112a) et une paire de modules de déplacement (4R, 4L), comprenant :
une paire de différentiels (104R, 104L) dont chacun a un planétaire soleil (121R, 121L), un support (122R, 122L) ayant une pluralité d'engrenages planétaires (123R, 123L) et un engrenage couronne (124R, 124L) ;
une paire de moteurs (105R, 105L) dont chacun fait entrer une force d'entraînement dans un différentiel correspondant parmi les différentiels (104R, 104L),
chacun des moteurs (105R, 105L) ayant un arbre de sortie (131R, 131L) qui est connecté à entraînement à l'engrenage couronne (124R, 124L) du différentiel correspondant parmi les différentiels (104R, 104L) de sorte que chacun des moteurs (105R, 105L) est adapté à être entraîné pour faire tourner les engrenages couronnes correspondants (124R, 124L) de sorte que la vitesse de rotation du support correspondant (122R, 122L) peut être réduite ; et
un moyen pour empêcher l'entraînement des deux moteurs (105R, 105L) au cours d'un déplacement en ligne droite du véhicule de travail (1) et pour entraîner un des moteurs (105R, 105L) au cours d'un virage du véhicule de travail (1),
dans laquelle, dans chacun des différentiels (104R, 104L), le support (122R, 122L) tourne suivant les engrenages planétaires (123R, 123L) amenés à tourner par la combinaison de la rotation du planétaire soleil (121R, 121L) et de la rotation de l'engrenage couronne (124R, 124L), et
dans laquelle les supports (122R, 122L) des différentiels respectifs (104R, 104L) sont connectés aux modules de déplacement respectifs (4R, 4L) de manière à transmettre les rotations des supports respectifs (123R, 123L) aux modules de déplacement respectifs (4R, 4L),
**caractérisée par**
une transmission à variation continue (103) changeant la force d'entraînement provenant de la partie d'entrée (112a) en vitesse de rotation, puis faisant entrer la force d'entraînement dans le planétaire soleil (121R, 121L) de chacun des différentiels (104R, 104L) ; et
chacun des engrenages couronnes (124R, 124L) est une roue à vis sans fin et une vis sans fin (132R, 132L) est prévue sur l'arbre de sortie (131R, 131L) de chacun des moteurs (105R, 105L) pour s'engrener avec la roue à vis sans fin (124R, 124L),
moyennant quoi la vis sans fin (132R, 132L) et la roue à vis sans fin (124R, 124L) sont configurées de sorte que la vis sans fin (132R, 132L) ne peut pas être entraînée à rotation par la roue à vis sans fin et que le reflux de force d'entraînement vers les deux moteurs (105R, 105L) peut être empêché au moment d'un déplacement en ligne droite.

2. Transmission du véhicule de travail selon la revendication 1, dans laquelle des moteurs électriques sont utilisés comme la paire de moteurs (105R, 105L).

3. Transmission du véhicule de travail selon la revendication 1 ou 2, dans laquelle une transmission hydrostatique à variation continue est utilisée comme la transmission à variation continue (103).
